# EUROPEAN PATENT SPECIFICATION

(11) **EP 2 832 535 B1**
(45) Date of publication and mention of the grant of the patent: **18.07.2018**
(21) Application number: 14178070.0
(22) Date of filing: 22.07.2014
(51) Int. Cl.: B31F 1/07, B65B 19/22

(54) **Embossing device**
Prägevorrichtung
Dispositif de gaufrage

(30) Priority: 31.07.2013 IT BO20130418
(43) Date of publication of application: 04.02.2015
(73) Proprietor: G.D S.p.A., 40133 Bologna (IT)
(72) Inventor: Ferrari, Michele, 40064 Ozzano dell'Emilia (Bologna) (IT); Berti, Danilo, 40128 Bologna (IT); Venturoli, Alessandro, 40057 Granarolo dell'Emilia (Bologna) (IT); Negrini, Stefano, 40012 Calderara di Reno (Bologna) (IT)
(74) Representative: Bianciardi, Ezio

(56) References cited:
- EP-A1- 1 867 470
- EP-A1- 2 468 493
- EP-A2- 2 027 994

## Description

This invention relates to an embossing device and, more specifically, to an embossing device intended for a machine of the tobacco industry, preferably a packaging machine.

A packaging machine designed to make packets filled with tobacco products, such as cigarettes, for example, to which express is made herein without limiting the scope of the invention, comprises an embossing device.

The embossing device embosses a strip or web of wrapping material, usually foil paper or the like, which, after being cut into lengths, is fed to the wrapping system of the cigarette packaging machine.

As is known, in packaging machines of this kind, the strip of foil paper is fed by means of an unwinding system along a predetermined path up to a cutting system which divides it along a cutting line transversal to a direction of strip feed into individual lengths, each used to wrap a group of cigarettes to form an inner wrapper of a respective packet.

As mentioned, the strip upstream of the cutting system is subjected to the action of the embossing device which basically comprises two counter-rotating rollers, a matrix roller and an opposing roller, located on opposite sides of the aforementioned path and tangent to each other.

On their respective cylindrical surfaces, these rollers are provided with protrusions, for example frusto-pyramidal in shape, which give the strip passing through it its typical rough-textured surface. Generally speaking, the cylindrical surfaces of the embossing rollers may also have zones without the frusto-pyramidal protrusions or with protrusions having other shapes, to produce desired graphic patterns or text on each length of strip and hence on a portion of the inner wrapper of the cigarette packet.

In order to position the graphic patterns relative to the group of cigarettes, the embossing device is usually shaped to imprint on each length of strip a reference mark or centring mark used to synchronize the cutting system with the unwinding of the strip.

More specifically, the centring mark, usually also made by embossing, allows both the unwinding system and the cutting system to be synchronized based on the pattern to be imprinted on the strip. The packaging machine comprises a system for reading the mark in order to identify a predetermined section of the strip.

The cutting system and the strip unwinding system are controlled according to the recognition of that section.

The prior art solutions have some disadvantages.

In the case of uniform embossing, the reference mark consists, for example, of a rectangle which is not embossed.

With other types of background embossing and/or strip material, however, it is necessary to optimize the contrast between the reference mark and the background in order to allow it to detected by the optical reading system.

The centring mark may be, for example, in the form of a uniformly embossed rectangle on a non-embossed strip or a non-embossed rectangle inside a uniformly embossed frame. EP-A-1867470 discloses an embossing device including one or more embossing stations with at least two embossing rolls the surface of which is provided with a plurality of embossing teeth. A number of said embossing teeth in a predetermined area of the surface are provided to emboss identification marks and have a different shape, height or surface structure with respect to the remaining teeth. In order to identify and choose the type of mark most easily detected by the optical system, packaging machine constructors have to carry out a number of tests.

Before being able to determine the reference mark specifications, these tests require the construction or purchase of embossers with different patterns and reference marks, a set of measurements and tests and calibration of the optical system.

In this context, the main technical purpose of this invention is to provide an embossing device and a packaging machine which are free of the above mentioned drawbacks.

The aim of this invention is to provide an embossing device which more effectively makes a centring reference in the strip of wrapping material being processed.

The technical purpose and aims specified are substantially achieved by an embossing device according to claim 1 and a packaging machine according to claim 3.

Further features of the invention and its advantages are more apparent in the non-limiting description below, with reference to a preferred but non-exclusive embodiment of a packaging machine, as illustrated in the accompanying drawings, in which:
- Figure 1 illustrates a packaging machine according to this invention in a schematic perspective view, partly in blocks and with some parts cut away for greater clarity;

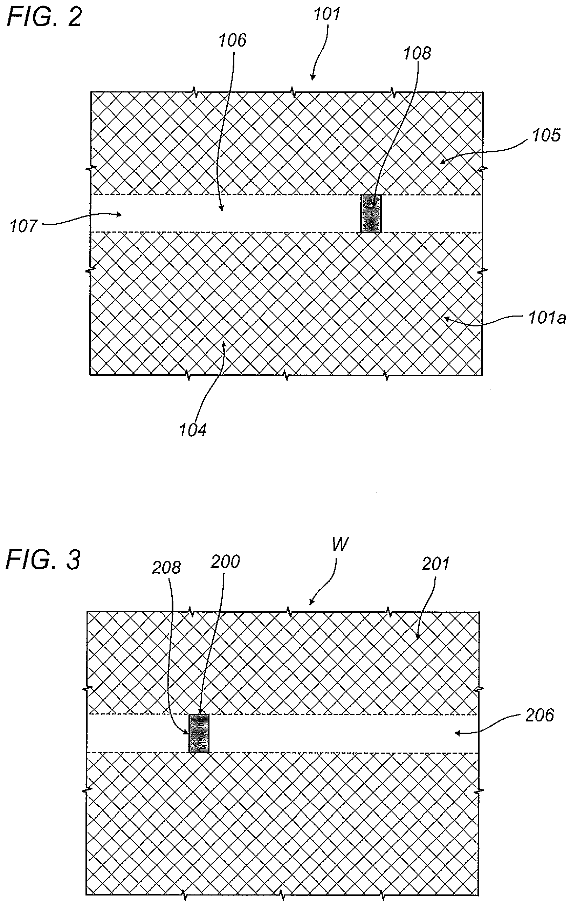

- Figure 2 illustrates a portion of the embossing roller forming part of the machine of Figure 1, in a schematic plan view from above;
- Figure 3 illustrates a portion of the strip of wrapping material processed in the machine of Figure 1, in a schematic plan view from above.

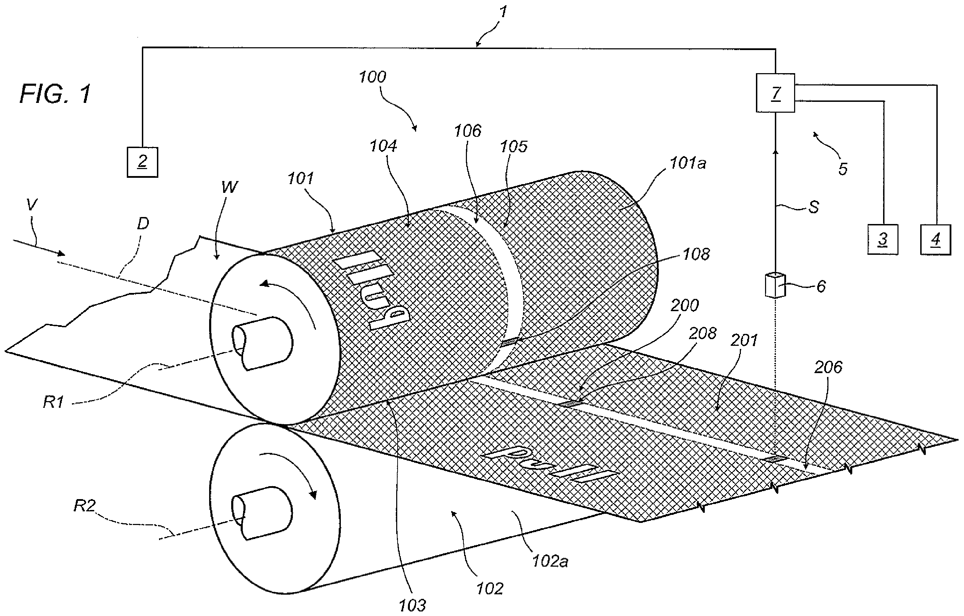

With reference to Figure 1, the numeral 1 denotes a packaging machine according to this invention.

The machine 1 is hereinafter described only insofar as necessary for understanding this invention.

The machine 1 is designed to make packets, not illustrated, containing tobacco products such as cigarettes, for example.

The machine 1 comprises forming means, of substantially known type and not described in detail, for forming a wrapper for the tobacco products from a strip W of wrapping material.

More specifically, the wrapper is the inner wrapper of a packet and the strip W of wrapping material is, for example, a strip of paper material or metallized paper, known as foil paper, or of metallic material such as, for example, aluminium foil or the like.

The strip W has a line of main extension D and advances in a feed direction V.

The forming means basically comprise a system for unwinding the strip W, schematically represented as a block 2, a system for cutting the strip into lengths, schematically represented as a block 3, and a system for folding the lengths of wrapping material, schematically represented as a block 4.

The machine 1 comprises a synchronizing system, denoted by the reference numeral 5, for synchronizing the unwinding system 2, the cutting system 3 and the folding system 4.

As will become clearer as this description continues, the synchronizing system 5 is configured to identify a section of the strip W based on the detection on the strip W itself of a reference 200 associated with that section, that is to say, a reference 200 which defines a section of the strip which controls the drive mechanism of the cutting system 3.

More specifically, the synchronizing system 5 identifies a predetermined section of the strip W, for example a transversal section thereof, based on the contrast between the reference 200 and the strip W.

The forming means comprise an embossing device 100 located along the feed path of the strip W to imprint a permanent mark on the strip W of wrapping material.

The device 100 is of a substantially known type and is described only insofar as necessary for understanding this invention.

The device 100 comprises a first embossing roller 101 and a second embossing roller 102 having respective axes of rotation R1 and R2. In the embodiment illustrated, with reference in particular to Figure 1, it may be observed that the roller 101 rotates anticlockwise and the roller 102 clockwise.

The roller 101 and the roller 102 are substantially cylindrical and the axes R1 and R2 are preferably parallel.

The roller 101 and the roller 102 delimit a passage 103 for the strip W and are positioned relative to each other in substantially known manner to emboss the strip W as it passes between the rollers 101 and 102 in the passage 103.

The roller 101 comprises on its outside surface 101a, imprinting means operating on the strip W.

In the preferred embodiment illustrated, the imprinting means comprise a substantially uniform tooth set 104.

More specifically, the tooth set 104 is shaped to imprint a generic pattern 201 on the strip W.

The term "pattern" 201 is used broadly to mean any finish, design, text or the like which must appear on the inner wrapper of the cigarette packet.

In the example illustrated, the pattern 201 comprises a rough-textured finish of the strip W and the word "Pull" typically appearing on the inner wrappers of cigarette packets.

In the embodiment illustrated, the roller 102 is an opposing roller acting in conjunction in substantially known manner with the roller 101 by means of its cylindrical surface 102a.

In an embodiment not illustrated in detail and known as *pin up-pin up* configuration, the surface 101a comprises a plurality of imprinting teeth and the surface 102a comprises a plurality of imprinting teeth acting in conjunction with the imprinting teeth on the surface 101a.

The teeth on the two surfaces 101a and 102a act in conjunction with each other, for example to satinize the strip W of wrapping material, and the teeth have, for example, a pyramid shape.

In an embodiment not illustrated in detail and known as *pin up-pin down* configuration, the surface 101a comprises a plurality of imprinting teeth and the surface 102a comprises a plurality of recesses for receiving the teeth of the roller 101.

The above mentioned imprinting means, and more specifically, the tooth set 104, are shaped to imprint the reference 200 on the strip. More specifically, the imprinting means comprise a system 105 for imprinting the reference 200 on the strip W.

The imprinting system 105 comprises an area 106 without teeth in the tooth set 104, where the strip W is not embossed.

As illustrated, the area 106 extends preferably along a sheaf 107 of contiguous directrices of the first roller 101 in such a way as to form on the strip W a non-embossed band 206 in the pattern 201. Preferably, the area 106 without teeth extends all the way round the first roller 101 so that the band 206 on the strip W is continuous and extends for the full length of the strip W.

The imprinting system 105 comprises at least one tooth set 108 located at the sheaf 107.

More specifically, the tooth set 108 is located in the area 106 without teeth to imprint on the strip W a mark 208 in the non-embossed band 206.

Preferably, the tooth set 108 extends parallel to a generatrix of the roller 101 or parallel to the axis of rotation R1.

Thus, for any pattern 201 imprinted on the strip W, the system 105 for imprinting the reference allows obtaining in the pattern 201 the non-embossed band 206 on which the mark 208 is formed.

The reference 208 has good contrast against the band 206, as explained better below. More specifically, defining a continuous non-embossed band 206 allows obtaining a smooth area which extends without interruption along the entire strip. Thus, the only interruption is defined by the reference mark 208. This makes it possible to obtain a very good contrast between the embossed mark and the smooth surface of the band, deformed or imperfect areas which might be confused with reference marks. That way, the cutting, unwinding and folding systems are sure to be correctly synchronized. The above mentioned synchronizing system 6 comprises a sensor 6 for reading the band 206 and configured to generate a reading signal S indicating detection of the mark 208, as a function of the contrast between the embossed mark 208 and the smooth band 206.

The machine 1, and more specifically, the aforementioned synchronizing system 5, comprises a computerized control unit 7 in communication with the sensor 6 to receive the signal S and configured to identify the section of the strip W based on the signal S. The unit 7 is in communication with the system 2 for unwinding the strip W, with the cutting system 3 and with the folding system 4 and is configured to identify the section of the strip and to synchronize the cutting system 3 with the unwinding system 2 based on the signal S. Advantageously, the contrast between the embossed mark and the smooth band for any pattern imprinted on the strip allows the embossed mark to be precisely detected and consequently guarantees correct synchronization of the cutting, unwinding and folding systems.

## Claims

1. An embossing device comprising a first embossing roller (101) and a second embossing roller (102) forming a passage (103) for a strip (W) of wrapping material to be embossed, the first embossing roller (101) and the second embossing roller (102) being relatively positioned for embossing the strip (W) passing through the passage (103), at least the first embossing roller (101) comprising on the relative surface (101a) imprinting means (104, 105) of at least one pattern (201) on the strip (W), the imprinting means comprising a tooth set (104) to imprint the pattern (201) and an imprinting system (105) to imprint a reference (200) on the strip (W) to identify a section of the strip (W), the imprinting system (105) comprises an area (106) without teeth in the tooth set (104), the embossing device being **characterized in that** the area (106) without teeth extending along a sheaf (107) of contiguous directrices and along the full circumference of the first roller (101) for forming on the strip (W) a continuous non-embossed band (206) in the pattern (201), the imprinting system (105) comprising at least one second tooth set (108) lying in the area (106) without teeth to imprint an embossed mark (208) on the strip (W) in the non-embossed band (206).

2. The device according to claim 1, wherein the second tooth set (108) extends parallel to a generatrix of the first roller (101).

3. A packaging machine for making packets comprising tobacco products, the packaging machine comprising means (2, 3, 4) for forming a wrapper for the tobacco products from a strip (W) of wrapping material, the forming means (2, 3, 4) comprising a system (2) for unwinding the strip (W), a system (3) for cutting the strip (W) and a device (100) for embossing the wrapping material, the machine comprising a system (5) for synchronizing at least the unwinding system (2) and the cutting system (3), the packaging machine being **characterized in that** the embossing device (100) is of the type according to claim 1 or 2, the synchronizing system (5) being configured for synchronizing the unwinding system (2) and the cutting system (3) as a function of the position of the section identified by the embossed mark (208)

4. The packaging machine according to claim 3 wherein the synchronizing system (5) comprises at least one sensor (6) for reading the embossed mark (208)

## Patentansprüche

1. Prägevorrichtung, umfassend eine erste Prägewalze (101) und eine zweite Prägewalze (102), bildend einen Durchgang (103) für einen Streifen (W) von zu prägendem Einwickelmaterial, wobei die erste Prägewalze (101) und die zweite Prägewalze (102) jeweils positioniert sind, um den durch den Durchgang (103) durchgeführten Streifen (W) zu prägen, wobei mindestens die erste Prägewalze (101) auf der jeweiligen Oberfläche (101a) Aufprägungsmittel (104, 105) von mindestens einem Muster (201) auf den Streifen (W) umfasst, wobei die Aufprägungsmittel einen Zahnsatz (104) umfassen, um das Muster (201) aufzuprägen, und ein Aufprägungssystem (105), um eine Referenz (200) auf den Streifen (W) zu prägen, um einen Abschnitt des Streifens (W) zu identifizieren, wobei das Aufprägungssystem (105) einen Bereich (106) ohne Zähne im Zahnsatz (104) umfasst, wobei die Prägevorrichtung **dadurch gekennzeichnet ist, dass** der Bereich (106) ohne Zähne sich entlang eines Bündels (107) aneinandergrenzender Richtungen und entlang des vollständigen Umfangs der ersten Walze (101) erstreckt, um auf dem Streifen (W) ein durchgehendes nicht geprägtes Band (206) im Muster (201) zu formen, wobei das Aufprägungssystem (105) mindestens einen zweiten Zahnsatz (108), umfasst, der sich im Bereich (106) ohne Zähne befindet, um eine Prägemarkierung (208) auf den Streifen (W) im nicht geprägten Band (206) aufzuprägen.

2. Vorrichtung nach Anspruch 1, wobei sich der zweite Zahnsatz (108) parallel zu einer Mantellinie der ersten Walze (101) erstreckt.

3. Verpackungsmaschine zur Herstellung von Paketen, umfassend Tabakprodukte, wobei die Verpackungsmaschine Mittel (2, 3, 4) zum Formen einer Hülle für die Tabakprodukte aus einem Streifen (W) aus Einwickelmaterial umfasst, wobei die Formungsmittel (2, 3, 4) ein System (2) umfassen, um den Streifen (W) abzuwickeln, ein System (3), um den Streifen (W) zu schneiden und eine Vorrichtung (100), um das Einwickelmaterial zu prägen, wobei die Maschine ein System (5) umfasst, um mindestens das Abwickelsystem (2) und das Schneidsystem (3) zu synchronisieren, wobei die Verpackungsmaschine **dadurch gekennzeichnet ist, dass** die Prägevorrichtung (100) vom Typ nach Anspruch 1 oder 2 ist, wobei das Synchronisierungssystem (5) ausgelegt ist, um das Abwickelsystem (2) und das Schneidsystem (3) als eine Funktion der Position des durch die Prägemarkierung (208) identifizierten Abschnitts zu synchronisieren.

4. Verpackungsmaschine nach Anspruch 3, wobei das Synchronisierungssystem (5) mindestens einen Sensor (6) umfasst, um die Prägemarkierung (208) zu lesen.

## Revendications

1. Dispositif de gaufrage comprenant un premier cylindre gaufreur (101) et un second cylindre gaufreur (102) formant un passage (103) pour une bande (W) de matériau d'emballage à gaufrer, le premier cylindre gaufreur (101) et le second cylindre gaufreur (102) étant relativement positionnés pour gaufrer la bande (W) passant à travers le passage (103), le premier cylindre gaufreur (101) comprenant au moins sur la surface (101a) relative, des moyens d'impression (104, 105), d'au moins un motif (201) sur la bande (W), les moyens d'impression comprenant un groupe de dents (104) pour imprimer le motif (201) et un système d'impression (105) pour imprimer une référence (200) sur la bande (W) pour identifier une section de la bande (W), le système d'impression (105) comprend une zone (106) sans dents dans le groupe de dents (104), le dispositif de gaufrage étant **caractérisé en ce que** la zone (106) sans dents se prolonge le long d'un faisceau (107) de directrices contiguës et le long de toute la circonférence du premier cylindre (101) pour former sur la bande (W) une bande continue non gaufrée (206) dans le motif (201), le système d'impression (105) comprenant au moins un second groupe de dents (108) reposant dans la zone (106) sans dents pour imprimer une marque gaufrée (208) sur la bande (W) dans la bande non gaufrée (206).

2. Dispositif selon la revendication 1, dans lequel le second groupe de dents (108) se prolonge parallèlement à une génératrice du premier cylindre (101).

3. Machine d'emballage servant à fabriquer des paquets comprenant des produits du tabac, la machine d'emballage comprenant des moyens (2, 3, 4) servant à former une enveloppe pour les produits du tabac à partir d'une bande (W) de matériau d'emballage, les moyens de formation (2, 3, 4) comprenant un système (2) pour dérouler la bande (W), un système (3) pour couper la bande (W) et un dispositif (100) pour gaufrer le matériau d'emballage, la machine comprenant un système (5) servant à synchroniser au moins le système de déroulement (2) et le système de coupe (3), la machine d'emballage étant **caractérisée en ce que** le dispositif de gaufrage (100) est du type selon les revendications 1 ou 2, le système de synchronisation (5) étant configuré pour synchroniser le système de déroulement (2) et le système de coupe (3) en fonction de la position de la section identifiée par la marque gaufrée (208) .

4. Machine d'emballage selon la revendication 3, dans laquelle le système de synchronisation (5) comprend au moins un capteur (6) servant à lire la marque gaufrée (208) .
